# FASCICULE DE BREVET EUROPEEN

(11) **EP 1 578 653 B1**
(45) Date de publication et mention de la délivrance du brevet: **10.04.2013**
(21) Numéro de dépôt: 03789306.2
(22) Date de dépôt: 17.12.2003
(51) Int. Cl.: B60T 13/575

(54) **SERVOMOTEUR D ASSISTANCE AU FREINAGE, SON PROCEDE DE FABRICA TION ET DISPOSITIF**
UNTERDRUCK-BREMSKRAFTVERSTÄRKER UND VERFAHREN ZU SEINER HERSTELLUNG
BRAKE SERVO UNIT, METHOD FOR MAKING SAME AND DEVICE

(30) Priorité: 20.12.2002 FR 0216463
(43) Date de publication de la demande: 28.09.2005
(73) Titulaire: BOSCH SISTEMAS DE FRENADO, S.L., 08080 Barcelona 6 (ES)
(72) Inventeur: BERTHOMIEU, Bruno, BARCELONE (ES); SACRISTAN, Fernando, 08348 BARCELONE (ES); SIMON BACARDIT, Juan, 08013 BARCELONE (ES); TOMAS, Leon, 08917 MONTIGALA-BADALONA (ES)
(74) Mandataire: Zöllner, Hartmut
(86) Numéro de dépôt international: PCT/EP2003/014372
(87) Numéro de publication internationale: WO 2004/056636

(56) Documents cités:
- WO-A-02/064411
- DE-A- 10 113 292
- FR-A- 2 820 388
- FR-A- 2 825 058
- US-A- 4 892 027

## Description

La présente invention se rapporte principalement à un servomoteur d'assistance pneumatique au freinage muni d'un dispositif d'assistance au freinage d'urgence, à un procédé de fabrication d'un tel servomoteur et à un dispositif de mise en oeuvre d'un tel procédé. Plus particulièrement, le servomoteur d'assistance pneumatique au freinage muni d'un dispositif d'assistance au freinage d'urgence permet d'augmenter le rapport d'assistance au delà d'un certain effort appliqué sur la tige de commande.

Un servomoteur d'assistance pneumatique au freinage muni d'un dispositif de freinage d'urgence est connu du document FR 2820388 A. Le servomoteur comporte de manière connue une enveloppe formée par une première et une seconde coquilles dans laquelle est montée à coulissement étanche une jupe divisant l'intérieur de l'enveloppe en une chambre à basse pression en une chambre à pression variable. Un piston pneumatique disposé dans la partie centrale de la jupe et solidaire de la jupe, comporte dans sa partie arrière une valve trois voies actionnée par une tige d'actionnement reliée à une pédale de frein. La valve trois voies met en communication lors d'une phase de repos la chambre à basse pression avec la chambre à pression variable et lors d'une phase de freinage interrompt la communication entre la chambre à basse pression et la chambre de freinage et met en communication la chambre à pression variable avec l'environnement extérieur à pression atmosphérique.

Le servomoteur d'assistance pneumatique au freinage comporte également une tige de poussée actionnant un piston d'un maître-cylindre et susceptible d'être déplacée lors d'une phase de freinage sous l'action de la tige d'actionnement et du piston pneumatique. Un disque de réaction est disposé dans un logement solidaire de l'extrémité arrière de la tige de poussée et compose trois forces, une première force provenant de la tige d'actionnement par l'intermédiaire d'un palpeur, une seconde force provenant du piston pneumatique et une troisième force provenant du maître-cylindre et appelée réaction hydraulique du circuit de freinage, le disque de réaction est réalisé en un matériau sensiblement incompressible par exemple en un caoutchouc.

Le servomoteur comporte également un dispositif d'assistance au freinage d'urgence permettant de modifier le rapport d'assistance, avantageusement de l'augmenter. Est appelé rapport d'assistance le rapport entre la force de sortie à la tige de poussée et la force d'entrée appliquée à la tige de commande. Cependant il n'est pas nécessaire pour une conduite de confort dans lequel les freinages d'urgence sont très peu fréquents d'avoir constamment un rapport d'assistance élevé.

Par conséquent, on réalise un servomoteur comportant un dispositif de freinage d'urgence permettant pour un effort exercé à la pédale de freinage supérieure à une valeur prédéterminée d'augmenter le rapport d'assistance et ainsi de favoriser un arrêt rapide du véhicule. Le dispositif de freinage d'urgence est disposé dans la tige de poussée à dans le logement de réception du disque de réaction, il comporte un élément élastique se déformant pour un effort à la pédale de frein supérieur à la valeur prédéterminée et monté en compression entre une face arrière de la tige de poussée et un élément flottant en contact avec le disque de réaction, le disque de réaction étant également en contact avec une bague annulaire entourant l'élément flottant sans jeu et solidaire de la tige de poussée. Ainsi, lors d'une phase de freinage durant laquelle l'effort à la pédale de frein est supérieur à la valeur prédéterminée, l'élément élastique se comprime permettant un déplacement axial vers l'avant de l'élément flottant et au disque de réaction de fluer vers l'avant. Ceci modifie la répartition de la réaction du maître-cylindre transmise au plongeur et par conséquent à la pédale de frein et modifie le rapport d'assistance.

Par conséquent, la précharge de l'élément élastique ou du ressort du dispositif de freinage d'urgence définit précisément l'effort seuil au delà duquel le rapport d'assistance est augmenté. Il est par conséquent nécessaire de pouvoir fixer précisément la précharge du ressort. Or, actuellement le réglage de la précharge du ressort est relativement imprécise puisqu'il s'effectue au moyen de cales en considérant une longueur donnée du ressort. Or, du fait de la raideur importante du ressort, il en résulte une grande dispersion dans la valeur seuil de l'effort de déclenchement du dispositif d'assistance au freinage d'urgence.

De plus, la valeur du saut du servomoteur est déterminée par la position relative entre la pièce flottante et la bague annulaire plus particulièrement entre la position axiale de la face de l'élément flottant en contact avec le disque de réaction et la face de la bague annulaire en contact avec le disque de réaction, il est par conséquent nécessaire de pouvoir disposer avec un jeu connu la face de l'élément flottant en contact avec le disque de réaction relativement à la face de la bague annulaire en contact avec le disque de réaction l'entourant.

C'est par conséquent un but de la présente invention d'offrir un servomoteur comportant un dispositif d'assistance au freinage d'urgence permettant deux rapports d'assistance d'une grande précision de déclenchement.

C'est également un but de la présente invention d'offrir un servomoteur comportant un dispositif d'assistance au freinage d'urgence, ayant une hauteur de saut déterminée.

C'est également un but de la présente invention d'offrir un procédé de fabrication d'un tel servomoteur simple et efficace.

Ces buts sont atteints par un servomoteur comportant un dispositif de freinage d'urgence dont les caractéristiques sont facilement réglables. Le dispositif de freinage d'urgence est en particulier réglable de manière unitaire. Les paramètres a régler sont l'effort d'activation dudit dispositif d'assistance au freinage d'urgence ainsi que la valeur du saut définie par la position relative de l'élément flottant et de la bague annulaire, le réglage de l'effort d'activation du dispositif d'assistance au freinage d'urgence étant effectué en fonction de la raideur du ressort que le dispositif contient.

En d'autres termes, le dispositif d'assistance au freinage d'urgence comporte des premiers éléments plastiquement déformables axialement lors de la fabrication du servomoteur permettant d'augmenter la charge du ressort jusqu'à ce que la charge souhaitée soit atteinte et comportant également des seconds éléments plastiquement déformables axialement permettant un déplacement relatif lors de la fabrication de la face arrière portée par l'élément flottant et de la face arrière portée par la bague annulaire et ainsi de permettre un réglage du saut précis.

La présente invention a principalement pour objet un servomoteur d'assistance pneumatique au freinage comportant une enveloppe d'axe longitudinal dans laquelle sont délimitées de manière étanche une chambre à basse pression et une chambre à pression variable par une paroi mobile portant un piston pneumatique dans sa partie centrale, une valve trois voies disposés dans la partie arrière du piston pneumatique et commandée par une tige d'actionnement, la valve trois voies comportant un clapet de rééquilibrage entre la chambre à basse pression et la chambre à pression variable et un clapet d'alimentation en haute pression de la chambre à pression variable, ledit clapet d'alimentation comportant un siège de clapet porté par une première extrémité longitudinale d'un distributeur plongeur et recevant une extrémité longitudinale de la tige d'actionnement, ledit distributeur plongeur portant un palpeur perpendiculaire à l'axe longitudinal à une deuxième extrémité longitudinale opposée à la première extrémité longitudinale et venant en contact d'une face d'un disque de réaction lors d'une phase de freinage, ledit disque de réaction étant disposé dans un logement solidaire d'une tige de poussée actionnant un maître-cylindre, ledit logement comportant un dispositif d'assistance pneumatique au freinage muni d'une cage solidaire de la tige de poussée par une première extrémité longitudinale fermée et obturée à une deuxième extrémité longitudinale ouverte par une bague annulaire solidaire de la cage et un piston de réaction monté à coulissement dans la bague selon l'axe longitudinal, ledit piston étant maintenu en réaction contre la bague par un moyen élastique de charge en appui par son extrémité arrière contre la première extrémité fermée de la cage, la surface formée par les faces arrières de la bague annulaire et du piston de réaction formant l'extrémité longitudinale avant du logement du disque de réaction caractérisé en ce que ledit dispositif comporte des moyens plastiquement déformables de réglage des caractéristiques du freinage en ce que les premiers moyens permettent de fixer un jeu à une valeur prédéterminée entre les plans comportant les faces arrières respectivement du piston de réaction et de la bague annulaire, en ce que les premiers moyens sont disposés entre une face avant de la bague annulaire et une face arrière d'une ailette s'étendant radialement vers l'extérieur de la périphérie du corps du piston de réaction, en ce que les deuxièmes moyens permettent de fixer la charge du moyen élastique à une valeur prédéterminée et en ce que les deuxièmes moyens sont disposés dans le dispositif d'assistance au freinage d'urgence de manière à modifier la position axiale de la première extrémité fermée de la cage par rapport au piston de réaction.

La présente invention a également pour objet un servomoteur caractérisé en ce que le moyen élastique est un ressort hélicoïdal.

La présente invention a également pour objet un servomoteur caractérisé en ce que lesdits premiers moyens sont formés par un anneau.

La présente invention a également pour objet un servomoteur caractérisé en ce que lesdits premiers moyens sont formés par une saillie annulaire venue de matière avec la bague annulaire s'étendant axialement vers l'avant de la face avant de la bague annulaire.

La présente invention a également pour objet un servomoteur caractérisé en ce que lesdits premiers moyens sont formés par une saillie annulaire venue de matière avec l'ailette et s'étendant axialement vers l'arrière de la face arrière de l'ailette.

La présente invention a également pour objet un servomoteur caractérisé en ce que les deuxièmes moyens sont formés par un anneau disposé entre la face avant de la bague annulaire et la face arrière d'une portée intérieure de la cage.

La présente invention a également pour objet un servomoteur caractérisé en ce que les deuxièmes moyens sont formés par une saillie annulaire venue de matière avec la bague annulaire s'étendant de la face avant de la bague annulaire axialement vers une portée intérieure de la cage.

La présente invention a également pour objet un servomoteur caractérisé en ce que la cage comporte un manchon obturé à une première extrémité longitudinale avant par un couvercle solidaire de la tige de poussée, les deuxièmes moyens étant disposés entre l'extrémité longitudinale avant du manchon et une face arrière du couvercle.

La présente invention a également pour objet un servomoteur caractérisé en ce que les deuxièmes moyens sont formés par une saillie annulaire venue de matière avec le manchon et s'étendant axialement en direction du couvercle.

La présente invention a également pour objet un servomoteur caractérisé en ce que ledit couvercle est solidarisé au manchon au moyen d'une extension annulaire radialement externe relativement à la saillie annulaire formant les deuxièmes moyens et venant se rabattre par déformation plastique sur la face avant du couvercle.

La présente invention a également pour objet un procédé de fabrication d'un servomoteur d'assistance pneumatique au freinage muni d'un dispositif d'assistance au freinage d'urgence selon la présente invention caractérisé en ce qu'il comporte entre autres
- une étape préalable de déformer plastiquement les premiers moyens de manière axiale afin de fixer le jeu à une valeur prédéterminer entre les faces arrières, du piston de réaction et de la bague annulaire ;
- une étape suivante de déformer plastiquement les seconds moyens de manière axiale afin de fixer la charge du moyen élastique à une valeur prédéterminer.

La présente invention a également pour objet un dispositif de mise en oeuvre de l'étape préalable du procédé selon la présente invention de fabrication d'un servomoteur d'assistance pneumatique au freinage comportant une enveloppe d'axe longitudinal dans laquelle sont délimitées de manière étanche une chambre à basse pression et une chambre à pression variable par une paroi mobile portant un piston pneumatique dans sa partie centrale, une valve trois voies disposés dans la partie arrière du piston pneumatique et commandée par une tige d'actionnement, la valve trois voies comportant un clapet de rééquilibrage entre la chambre à basse pression et la chambre à pression variable et un clapet d'alimentation en haute pression de la chambre à pression variable, ledit clapet d'alimentation comportant un siège de clapet porté par une première extrémité longitudinale d'un distributeur plongeur et recevant une extrémité longitudinale de la tige d'actionnement, ledit distributeur plongeur portant un palpeur perpendiculaire à l'axe longitudinal à une deuxième extrémité longitudinale opposée à la première extrémité longitudinale et venant en contact d'une face d'un disque de réaction lors d'une phase de freinage, ledit disque de réaction étant disposé dans un logement solidaire d'une tige de poussée actionnant un maître-cylindre, ledit logement comportant un dispositif d'assistance pneumatique au freinage muni d'une cage solidaire de la tige de poussée par une première extrémité longitudinale fermée et obturée à une deuxième extrémité longitudinale ouverte par une bague annulaire solidaire de la cage et un piston de réaction monté à coulissement dans la bague selon l'axe longitudinal, ledit piston étant maintenu en réaction contre la bague par un moyen élastique de charge en appui par son extrémité arrière contre la première extrémité fermée de la cage, la surface formée par le faces arrières de la bague annulaire et du piston de réaction formant l'extrémité longitudinale avant du logement du disque de réaction, ledit dispositif comportant des moyens plastiquement déformables de réglage des **caractéristiques du freinage** caractérisé en ce qu'il comporte un premier élément et un second élément mobile relativement au premier élément selon l'axe longitudinal, ledit premier élément comportant une surface de référence définissant la valeur prédéterminée du jeu et le second élément comportant une surface d'appui annulaire coopérant avec la face avant de l'ailette du piston de réaction.

La présente invention a également pour objet un dispositif de mise en oeuvre de l'étape suivante du procédé selon la présente invention caractérisé en ce qu'il comporte un troisième élément et un quatrième élément mobile selon l'axe longitudinal relativement au troisième élément, ledit troisième élément comportant une surface d'appui annulaire de la face avant de la bague annulaire et un moyen de détection de l'effort appliqué sur le piston de réaction par le moyen élastique, le quatrième élément comportant une surface d'application d'un effort de déformation sur la cage de manière à déformer plastiquement les seconds moyens lors d'un déplacement axiale du quatrième élément en direction du troisième élément de manière à ce que la charge du moyen élastique soit égale à la valeur prédéterminée.

La présente invention sera mieux comprise à l'aide de la description ci-dessous et des figures en annexes sur lesquelles :
La figure 1 est une vue en coupe longitudinale d'un servomoteur de type connu;

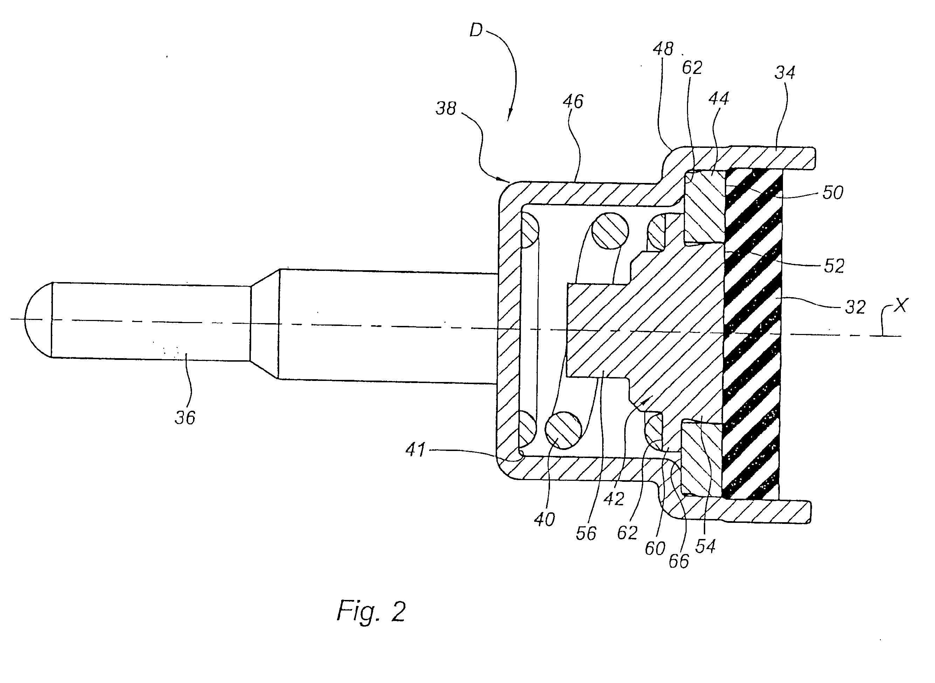

La figure 2 est une vue de détail de la figure 1 ;
La figure 3 est une vue en coupe longitudinale d'un premier mode de réalisation d'un servomoteur selon la présente invention ;
La figure 4 est une vue d'un détail de la figure 3 ;
La figure 5 est une vue en coupe longitudinale d'un détail d'un premier exemple d'un second mode de réalisation d'un servomoteur selon la présente invention ;
La figure 6 une vue en coupe longitudinale d'un détail d'un deuxième exemple du second mode de réalisation d'un servomoteur selon la présente invention ;
La figure 7 est une vue schématique d'un dispositif de mise en oeuvre d'un procédé de fabrication d'un servomoteur selon la présente invention lors d'une première étape ;
La figure 8 est une vue schématique d'un dispositif de mise en oeuvre d'un procédé de fabrication d'un servomoteur selon la présente invention lors d'une deuxième étape ;

L'arrière d'un élément désigne la partie de l'élément orienté en direction de la tige de commande et l'avant de l'élément désigne la partie de la pièce orientée vers la tige de poussée.

On entend par « élément plastiquement déformable », un élément dont la forme est modifiée du fait de l'application d'une charge minimum lors d'une étape de fabrication, cette forme étant la forme définitive de l'élément une fois monté dans le dispositif qu'il compose, l'élément ne subissant plus alors de charge susceptible de le déformer de manière non temporaire.

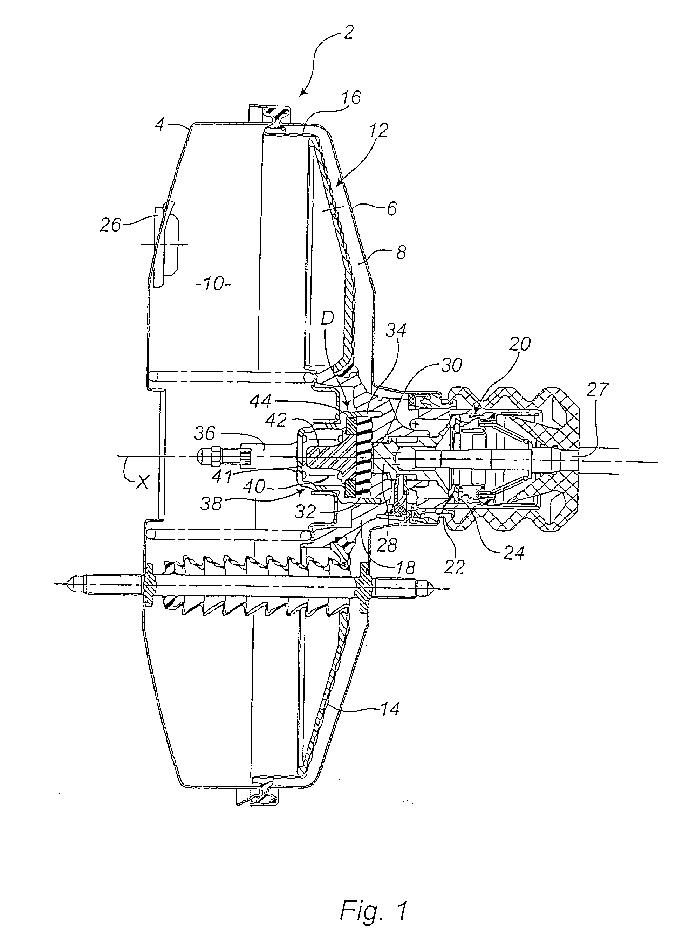

Sur la figure 1, on peut voir un servomoteur de type connu d'axe longitudinal X comportant une enveloppe 2 formée par une première et une seconde coquilles 4,6 définissant un espace intérieur. Le servomoteur comporte également une paroi mobile 12 divisant de manière étanche l'espace intérieur en une chambre arrière à pression variable 8 et une chambre avant à basse pression 10.

La paroi mobile 12 est formé par une jupe 14 et une membrane 16 déroulante souple solidaire de manière étanche à la fois de la jupe 14 sur sa périphérie extérieure et de l'enveloppe 2 du servomoteur.

La jupe 16 comporte un orifice centrale dans lequel est monté fixe un piston pneumatique 18 recevant dans sa partie arrière une valve trois voies 20 actionnée par une tige de commande 27 reliée à une pédale de frein (non représentée).

La valve trois voies 20 comporte un clapet de rééquilibrage 22 mettant en communication au repos la chambre avant 10 avec la chambre arrière et interrompant cette communication lors d'une phase de freinage, et un clapet d'alimentation 24 en fluide pneumatique à haute pression, par exemple de l'air à pression atmosphérique de la chambre arrière 8.

La chambre avant est reliée par un connecteur 26 à une source de basse pression, par exemple une pompe à vide.

L'extrémité longitudinale avant de la tige de commande 27 est reçue de manière rotulante dans une extrémité arrière d'un distributeur plongeur 28 formant également siège du clapet d'alimentation 24.

Le distributeur plongeur 28 comporte à son extrémité longitudinale avant 30 un palpeur susceptible de venir en contact contre une face arrière d'un disque de réaction 32 reçu dans un logement 34 en forme de coupelle solidaire d'une tige de poussée 36, la tige de poussée venant déplacer un piston (non représenté) d'un maître-cylindre.

Le servomoteur comporte également un dispositif d'assistance au freinage D permettant pour une force d'actionnement à la pédale supérieure à une valeur déterminée d'augmenter le saut du servomoteur.

Le dispositif D forme le logement 34 pour le disque de réaction 32 et comporte une cage 38 de section longitudinale sensiblement en U, dont le fond du U est relié de manière fixe à la tige de poussée 36. Un moyen élastique par exemple un ressort hélicoïdal 40 est montée en compression entre une face arrière 41 du fond de la cage 38 et un élément flottant 42 ou piston de réaction obturant l'extrémité arrière ouverte du U en coopération avec une bague annulaire 44 entourant le piston de réaction 42 et montée fixe par rapport à la cage 38.

Le piston de réaction 42 comporte une première portion avant 54 de plus petit diamètre, une seconde portion de plus grand diamètre 56. La partie de plus grand diamètre 56 de diamètre extérieur égal au diamètre intérieur de la bague 44, est montée coulissant dans la bague annulaire. Le piston de réaction 42 comporte également une ailette 60 annulaire s'étendant radialement vers l'extérieur de la deuxième portion de plus faible diamètre 56.

L'ailette 60 porte une surface d'appui 62 pour l'extrémité longitudinale arrière du ressort 40 et une surface 64 avant en appui au repos contre une face avant 66 de la bague annulaire 44.

La position de la face arrière 52 du piston de réaction 42 relativement à la face arrière 50 de la bague annulaire 44 définie par le jeu j (non représenté) séparant les plans contenant les faces arrières 52,50 intervient dans la détermination de la hauteur du saut du servomoteur.

Dans la suite de la description, lorsqu'il sera question d'alignement des faces arrières 52, 50, cela signifiera que la distance séparant les plans contenant ses faces est comprise entre 0 et 0,3mm.

La cage 38 comporte une première portion avant 46 de plus faible diamètre, une seconde portion 48 arrière de plus grand diamètre et reliée à la portion de plus faible diamètre 46 par une extension radiale 47 formant une portée radiale intérieure pour la face avant 66 de la bague annulaire 44.

Le logement 34 du disque de réaction est formé par une section arrière de la seconde portion de plus grand diamètre 48 et la face arrière 50 de la bague 44 et une face arrière 52 du piston de réaction 42.

La bague 44 est rendue solidaire de la cage 38 par exemple par sertissage mais on pourrait envisager le collage.

Le fonctionnement d'un servomoteur tel que décrit étant connu, nous ne le décrirons pas cependant, nous allons expliquer le fonctionnement du dispositif d'assistance D.

Dans le cas où la force de freinage appliquée à la pédale de frein est inférieure à la valeur prédéterminée Fp, ce qui correspond à un effort au niveau du disque de réaction inférieure à la charge en place du ressort 40, le piston de réaction 42 reste immobile par rapport à la bague annulaire 44 et la transmission de la force de réaction au distributeur plongeur s'effectue de manière connue.

Dans la cas où la force de freinage appliquée à la pédale de frein reste supérieure à la valeur prédéterminée Fp, ce qui correspond à un effort au niveau du disque de réaction supérieure à la charge en place du ressort 40, le piston de réaction 42 se déplace en direction de la tige de poussée 36, permettant une extrusion du disque de réaction 34 et modifiant la répartition des efforts dans le disque de réaction. Il y a alors une augmentation du rapport d'assistance.

On se rend alors compte de l'importance du réglage de la charge du ressort pour la détermination de la force limite de déclenchement Fp ainsi que la nécessité de l'alignement des faces arrières 50,52 de la bague annulaire 44 et du piston de réaction 42 afin de ne pas modifier le comportant du servomoteur en freinage de confort.

Grâce à la présente invention, il est possible de réaliser de manière unitaire le réglage de la charge du ressort 40 et donc de la valeur de la force Fp.

Il est également possible d'ajuster la valeur du saut du servomoteur en réglant le jeu axial j séparant les faces arrières 50,52 de la bague annulaire 44 et du piston de réaction 42.

Selon la présente invention, des premiers moyens 68 déformables plastiquement selon l'axe X permettant de régler le jeu axial j entre la face arrière 50 de la bague 44 et la face arrière 52 du piston de réaction 42, sont disposés entre la face avant 66 de la bague 44 et la face arrière 62 de l'ailette 60.

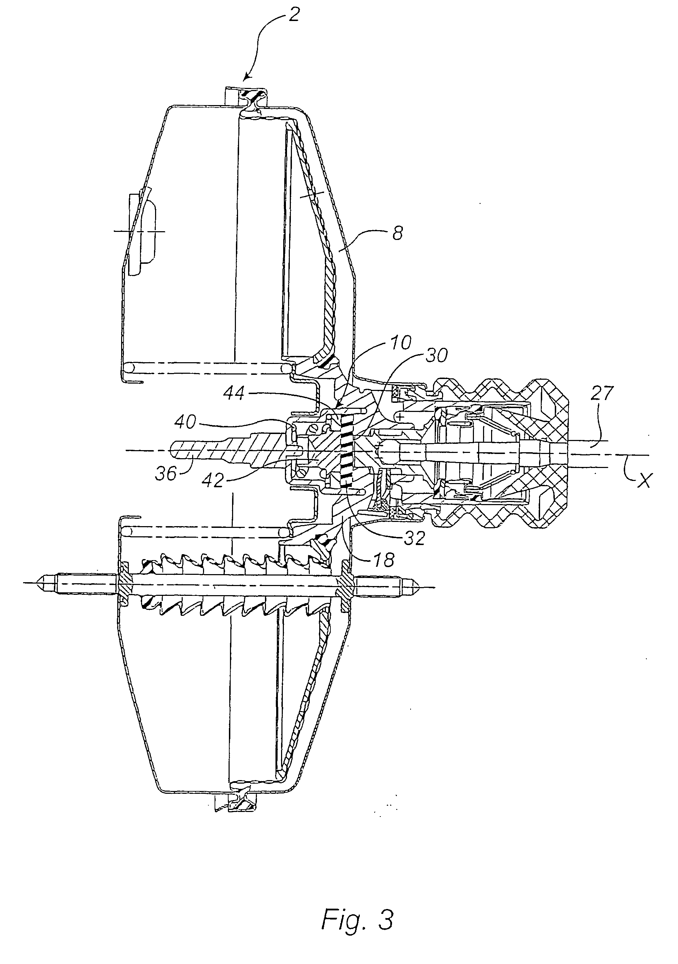

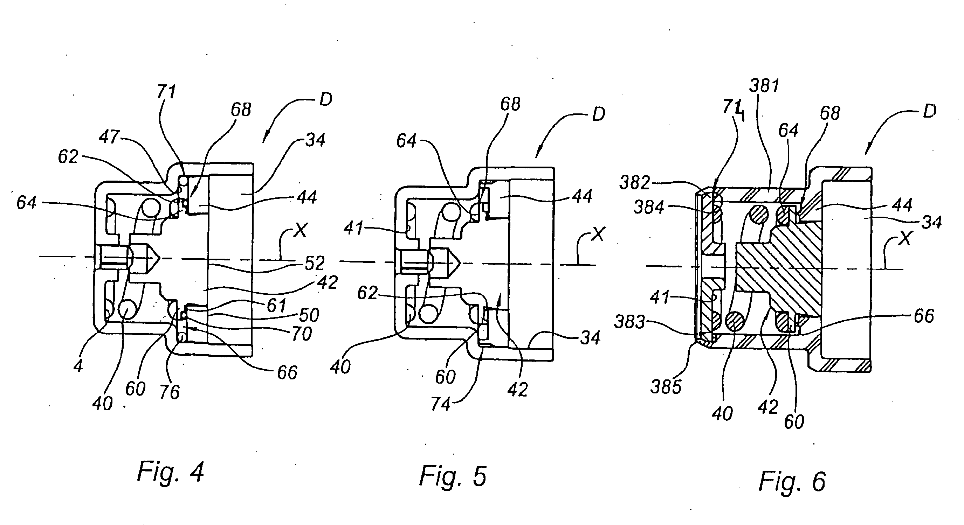

Sur les figures 3 et 4, on peut voir un premier mode de réalisation d'un dispositif D selon la présente invention comportant des premiers moyens 68 formés par un anneau déformable 70 plastiquement et réalisé par exemple en acier ou en alliage d'aluminium.

La face arrière de l'ailette 60 comporte avantageusement un épaulement 61 de maintien transversal de l'anneau 70.

Sur les figures 5 et 6, on assure le réglage du jeu j entre les faces arrières 52 et 50 des premiers moyens 68 formés par une saillie annulaire sur la face arrière 62 de l'ailette 60 dans un premier exemple (figure 5), ou sur la face avant 66 de la bague annulaire 44 dans un second exemple (figure 6) et s'étendant selon l'axe X respectivement vers l'arrière et vers l'avant.

La saillie est avantageusement venue de matière avec le piston de réaction 42 selon le premier exemple ou avec la bague 44 selon le second exemple.

Il est cependant envisageable de prévoir une saillie annulaire formée par un manchon séparé et disposé entre les faces 62 et 66.

Il est bien entendu que l'extension selon l'axe X des premiers moyens 68 doit être suffisante pour relier les deux surfaces entre lesquelles ils sont interposés lorsque que la valeur Vj prédéterminée du jeu j est atteinte.

Selon la présente invention, le dispositif D comporte avantageusement des seconds moyens 74 plastiquement déformables permettant de régler la charge du moyen élastique 40 et ceci en modifiant la distance séparant la face arrière 41 du fond de la cage 38 fixée à la tige de poussée 36 et la face avant 64 de l'ailette 60.

Sur la figure 4, les seconds moyens 74 sont formés par un anneau 76 déformable plastiquement et venant s'interposer entre une face avant 66 de la bague annulaire et la portée intérieure 47 de la cage 38, l'anneau 76 formant alors un moyen d'appui axial pour la bague annulaire 44.

L'anneau est avantageusement réalisé en un matériau ayant un haut niveau d'allongement à la rupture par exemple l'acier, les alliages d'aluminium ou les alliages de cuivre.

Sur les figures 5 et 6, on peut voir deux exemples d'un second mode de réalisation du dispositif D selon la présente invention pour lequel les seconds moyens 74 déformables plastiquement sont une saillie annulaire s'étendant selon l'axe X de la face arrière de la bague annulaire 44 selon un premier exemple (figure 5) et venant en appui contre la portée annulaire 47 de la cage 38. Selon un deuxième exemple, la cage 38 comporte un manchon 381 obturé à son extrémité longitudinale avant 383 par un couvercle 382 fixé au manchon 381 par déformation d'une extension longitudinale 385 du manchon.

L'extrémité longitudinale avant 383 du manchon comporte un épaulement annulaire 384 sur sa périphérie intérieur définissant l'extension longitudinale de plus faible épaisseur 385 relativement à l'épaisseur du manchon et venant se rabattre sur la périphérie du couvercle pour le maintenir

Le second moyen 74 est alors formé par une saillie annulaire sur l'épaulement 384 et venant en appui sur la face arrière du couvercle 382.

Dans le deuxième exemple représenté en figure 6, la bague annulaire est avantageusement venue de matière avec le manchon 381, le piston de réaction 42 est alors monté par l'extrémité longitudinale avant du manchon 381 avant son obturation par le couvercle 382.

Il est bien entendu que la dimension axiale du second moyen 74 est déterminer de manière à ce que la distance séparant les deux butées du ressort 40 avant déformation du second moyen 74 implique une charge du ressort inférieure ou égale à celle requise.

Le dispositif D selon la présente invention comporte avantageusement les premiers 68 et les seconds 74 moyens déformables plastiquement. Mais il est bien entendu qu'il est envisageable de prévoir un dispositif comportant les premiers 68 ou les seconds 74 moyens déformables plastiquement en fonction des nécessités de fabrication et de réglage.

Le procédé de fabrication selon la présente invention d'un servomoteur comportant un dispositif D d'assistance au freinage selon la présente invention comporte de manière avantageuse entre autres
- l'étape préalable A de fixer le jeu j d'alignement entre les faces arrières 50 et 52 de la bague annulaire 44 et du piston de réaction 42 à une valeur prédéterminée Vj par déformation plastique des premiers moyens plastiquement déformables et en particulier par réduction de leur extension axiale ;
- l'étape suivante B de fixer la charge ch du ressort à une valeur prédéterminée Vch par déformation des seconds moyens plastiquement déformables 74, en particulier par réduction de leur extension axiale.

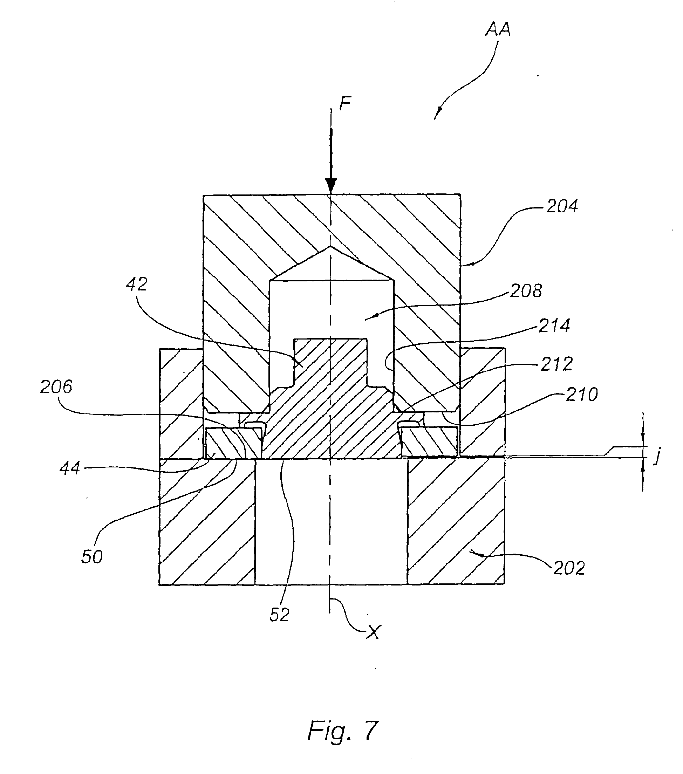

Sur la figure 7, on peut voir un dispositif AA de mise en oeuvre de l'étape A du procédé selon le présente invention d'axe X comportant un premier élément 202 permettant d'ajuster le jeu j à la valeur Vj entre la surface arrière 50 de la bague annulaire 44 et la face arrière 52 du piston de réaction 42 et un second élément 204 mobile permettant de déformer les premiers moyens plastiquement déformables afin de fixer définitivement le jeu j à la valeur Vj.

Le premier élément 202 est muni d'un surface plane 206, par exemple un marbre.

Le second élément 204 comporte un logement de réception 208 formé par un alésage non débouchant de diamètre intérieur avantageusement sensiblement égal au diamètre d'une partie de la portion de plus petit diamètre et formant ainsi un moyen de maintien latérale.

L'extrémité ouverte de l'alésage 214 comporte avantageusement un chanfrein 212 afin de facilité la mise en place du piston de réaction 42.

Une surface d'appui 210 perpendiculaire à l'axe X entourant l'extrémité ouverte de l'alésage 214 est prévu et vient coopérer avec la face avant 64 de l'ailette.

Le second élément 204 est mobile selon l'axe X pour venir déformer les premiers moyens 68 lorsqu'il est déplacé dans le sens de la flèche F.

Nous allons maintenant décrire le procédé d'ajustage du jeu j d'alignement entres les faces arrières 50, 52 de la bague 44 et du piston de réaction 42.
- On place la bague 44 sur le marbre 206 de manière à ce que la face arrière 50 de la bague soit en contact avec le marbre;
- On place le piston de réaction 42 dans la bague 44 de manière à ce que sa face arrière 52 soit orienté vers le marbre 206 ;
- On dispose le second élément 204, par exemple par coulissement selon l'axe X autour du piston de réaction 42 ;
- On déplace axialement dans la direction de la flèche le second élément 204 de manière à ce que la face 212 du deuxième élément 204 viennent en contact de la face 64 de l'ailette et que l'on déforme axialement les premiers moyens 68 jusqu'à ce que la face arrière 52 du piston de réaction 42 soit en contact du marbre 206. Ce contact est déterminer par exemple par la mesure d'un effort dont la valeur doit être compris entre la valeur de la déformation plastique de l'ailette et la valeur de la déformation plastique du piston de réaction ;
- On déplace axialement dans la direction opposée de la flèche F le second élément 204 pour récupérer l'ensemble bague 44-piston 42.

Le dispositif AA s'applique également aux autres modes de réalisation des premiers moyens 68 représentés au figures 5 et 6.

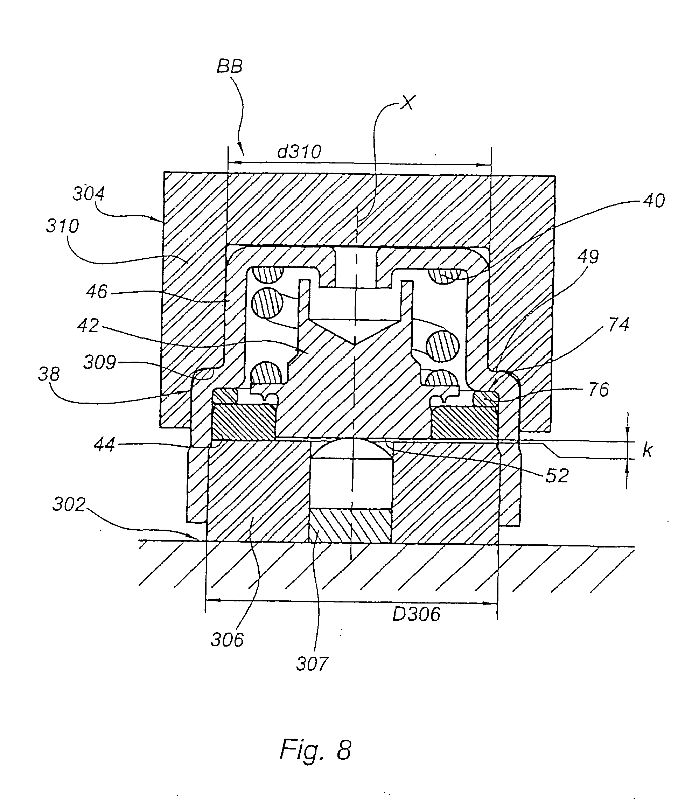

Sur la figure 8, on peut voir un dispositif BB de mise en oeuvre de l'étape B du procédé selon la présente invention, d'axe X comportant un troisième élément 302 fixe et un quatrième élément 304 mobile en translation selon l'axe X de manière à pouvoir se rapprocher du troisième élément 302.

Le troisième élément 302 comporte un élément tubulaire 306 de diamètre extérieur D306 au plus égal au diamètre intérieure de la portion de plus grand diamètre 48 de la cage 38. Le troisième élément 302 comporte également un détecteur d'effort 307 disposé dans le passage centrale du tube 306 et en contact avec la face arrière 52 du piston de réaction 42 et permettant de mesurer l'effort qu'applique le ressort 40 au piston de réaction 42.

Le capteur d'effort mesure une précharge du ressort qui correspond à la précharge du ressort en position de montage plus une précharge provoquée artificiellement par un jeu h prédéterminé pour la mesure entre les faces arrière 52 du piston de réaction 42 et de la face avant de l'élément 306.

Le quatrième élément 304 est mobile en translation selon l'axe X et comporte une surface d'appui 308, avantageusement annulaire et venant s'appliquer lors de la fabrication sur une portée extérieure 49 de la cage 38.

La surface d'appui 308 est par exemple formée par l'extrémité longitudinale d'un manchon tubulaire 310 de diamètre intérieur d310 au moins égal, avantageusement égal au diamètre extérieure de la portion 46 de plus petit diamètre de la cage 38 formant ainsi un guidage en translation selon X du quatrième élément 304 par rapport à la cage 38.

Nous allons maintenant décrire le procédé d'ajustage de la charge de compression du ressort 40 à une valeur Vch.
- On place le dispositif D sur le troisième élément 302 de manière à ce que la face arrière 50 de la bague 44 soit en appui sur le troisième élément 302 et à ce que le détecteur d'effort soit en contact avec le piston de réaction,
- On dispose le quatrième élément 304, par exemple par coulissement selon l'axe X autour du piston de la portion d46 de plus faible diamètre ;
- On crée un jeu k entre la face 52 du piston de réaction 42 et la face avant de l'élément 306 ;
- On déplace axialement dans la direction de la flèche le troisième élément 304 de manière à ce que la face 308 du quatrième élément 304 vienne en contact de la portée arrière 49 de la cage 38 et à ce que l'on déforme les seconds moyens 74 jusqu'à ce que le détecteur d'effort mesure par l'intermédiaire du piston de réaction 42 une charge du ressort égale à Vch.
- On déplace axialement dans la direction opposée de la flèche le second élément 204 pour récupérer l'ensemble bague 44-piston 42.

Il est bien entendu que le fait d'associer des premiers 68 et des seconds moyens 74 différemment des exemples décrits ne sort pas du cadre de la présente invention.

On a bien réalisé un servomoteur d'assistance pneumatique au freinage muni d'un dispositif d'assistance au freinage d'urgence dont le déclenchement est déterminé de manière précise, de plus selon la présente invention il est possible de fixer la hauteur du saut dudit servomoteur également avec une grande précision.

La présente invention s'applique principalement à l'industrie du freinage pour voiture particulière.

## Revendications

1. Servomoteur d'assistance pneumatique au freinage comportant une enveloppe (2) d'axe longitudinal (X) dans laquelle sont délimitées de manière étanche une chambre à basse pression (10) et une chambre à pression variable (8) par une paroi mobile (12) portant un piston pneumatique (18) dans sa partie centrale, une valve trois voies (20) disposée dans la partie arrière du piston pneumatique (18) et commandée par une tige d'actionnement (27), la valve trois voies comportant un clapet de rééquilibrage (22) entre la chambre à basse pression (10) et la chambre à pression variable (8) et un clapet d'alimentation (24) en haute pression de la chambre à pression variable (8), ledit clapet d'alimentation comportant un siège de clapet porté par une première extrémité longitudinale d'un distributeur plongeur (28) et recevant une extrémité longitudinale de la tige d'actionnement (27), ledit distributeur plongeur (28) portant un palpeur (30) perpendiculaire à l'axe longitudinal (X) à une deuxième extrémité longitudinale opposée à la première extrémité longitudinale et venant en contact d'une face d'un disque de réaction (32) lors d'une phase de freinage, ledit disque de réaction étant disposé dans un logement (34) solidaire d'une tige de poussée (36) actionnant un maître-cylindre, ledit logement (34) comportant un dispositif (D) d'assistance pneumatique au freinage muni d'une cage (38) solidaire de la tige de poussée (36) par une première extrémité longitudinale fermée et obturée à une deuxième extrémité longitudinale ouverte par une bague annulaire (44) solidaire de la cage (38) et un piston de réaction (42) monté à coulissement dans la bague (44) selon l'axe longitudinal (X), ledit piston étant maintenu en réaction contre la bague (44) par un moyen élastique (40) de charge (ch) en appui par son extrémité arrière contre la première extrémité fermée de la cage (38), la surface formée par le faces arrières (50,52) de la bague annulaire (44) et du piston de réaction (42) formant l'extrémité longitudinale avant du logement (34) du disque de réaction **caractérisé en ce que** ledit dispositif comporte des premiers et deuxièmes moyens (68,74) plastiquement déformables de réglage des caractéristiques du freinage, **en ce que** les premiers moyens (68) permettent de fixer un jeu (j) à une valeur prédéterminée (Vj) entre les plans comportant les faces arrières (52,50) respectivement du piston de réaction (42) et de la bague annulaire (44), **en ce que** les premiers moyens (68) sont disposés entre une face avant (66) de la bague annulaire (44) et une face arrière (62) d'une ailette (60) s'étendant radialement vers l'extérieur de la périphérie du corps du piston de réaction (52), **en ce que** les deuxièmes moyens (74) permettent de fixer la charge (ch) du moyen élastique (40) à une valeur prédéterminée (Vch)et **en ce que** les deuxièmes moyens (74) sont disposés dans le dispositif d'assistance au freinage d'urgence (D) de manière à modifier la position axiale de la première extrémité fermée de la cage (38) par rapport au piston de réaction (42).

2. Servomoteur selon la revendication 1 **caractérisé en ce que** le moyen élastique (40) est un ressort hélicoïdal.

3. Servomoteur selon la revendication précédente **caractérisé en ce que** lesdits premiers moyens (68) sont formés par un anneau.

4. Servomoteur selon la revendication 1 ou 2 **caractérisé en ce que** lesdits premiers moyens (68) sont formés par une saillie annulaire venue de matière avec la bague annulaire (44) s'étendant axialement vers l'avant de la face avant (66) de la bague annulaire.

5. Servomoteur selon la revendication 1 ou 2 **caractérisé en ce que** lesdits premiers moyens (68) sont formés par une saillie annulaire venue de matière avec l'ailette (60) et s'étendant axialement vers l'arrière de la face arrière (62) de l'ailette (60).

6. Servomoteur selon la revendication précédente **caractérisé en ce que** les deuxièmes moyens (74) sont formés par un anneau disposé entre la face avant (66) de la bague annulaire (44) et la face arrière d'une portée intérieure (47) de la cage (38).

7. Servomoteur selon les revendications 1 à 5 **caractérisé en ce que** les deuxièmes moyens (74) sont formés par une saillie annulaire venue de matière avec la bague annulaire (44) s'étendant de la face avant (66) de la bague annulaire axialement vers une portée intérieure (47) de la cage (38).

8. Servomoteur selon les revendications 1 à 5 **caractérisé en ce que** la cage (38) comporte un manchon (381) obturé à une première extrémité longitudinale avant (383) par un couvercle (382) solidaire de la tige de poussée (36), les deuxièmes moyens (74) étant disposés entre l'extrémité longitudinale avant du manchon (381) et une face arrière du couvercle (382).

9. Servomoteur selon la revendication précédente **caractérisé en ce que** les deuxièmes moyens (74) sont formés par une saillie annulaire venue de matière avec le manchon (381) et s'étendant axialement en direction du couvercle (382).

10. Servomoteur selon les revendications 8 ou 9 **caractérisé en ce que** ledit couvercle (382) est solidarisé au manchon (381) au moyen d'une extension annulaire radialement externe relativement à la saillie annulaire formant les deuxièmes moyens (74) et venant se rabattre par déformation plastique sur la face avant du couvercle (382).

11. Procédé de fabrication d'un servomoteur d'assistance pneumatique au freinage comportant une enveloppe (2) d'axe longitudinal (X) dans laquelle sont délimitées de manière étanche une chambre à basse pression (10) et une chambre à pression variable (8) par une paroi mobile (12) portant un piston pneumatique (18) dans sa partie centrale, une valve trois voies (20) disposéé dans la partie arrière du piston pneumatique (18) et commandée par une tige d'actionnement (27), la valve trois voies comportant un clapet de rééquilibrage (22) entre la chambre à basse pression (10) et la chambre à pression variable (8) et un clapet d'alimentation (24) en haute pression de la chambre à pression variable (8), ledit clapet d'alimentation comportant un siège de clapet porté par une première extrémité longitudinale d'un distributeur plongeur (28) et recevant une extrémité longitudinale de la tige d'actionnement (27), ledit distributeur plongeur (28) portant un palpeur (30) perpendiculaire à l'axe longitudinal (X) à une deuxième extrémité longitudinale opposée à la première extrémité longitudinale et venant en contact d'une face d'un disque de réaction (32) lors d'une phase de freinage, ledit disque de réaction étant disposé dans un logement (34) solidaire d'une tige de poussée (36) actionnant un maître-cylindre, ledit logement (34) comportant un dispositif (D) d'assistance pneumatique au freinage muni d'une cage (38) solidaire de la tige de poussée (36) par une première extrémité longitudinale fermée et obturée à une deuxième extrémité longitudinale ouverte par une bague annulaire (44) solidaire de la cage (38) et un piston de réaction (42) monté à coulissement dans la bague (44) selon l'axe longitudinal (X), ledit piston étant maintenu en réaction contre la bague (44) par un moyen élastique (40) de charge (ch) en appui par son extrémité arrière contre la première extrémité fermée de la cage (38), la surface formée par le faces arrières (50,52) de la bague annulaire (44) et du piston de réaction (42) formant l'extrémité longitudinale avant du logement (34) du disque de réaction, ledit dispositif comportant des premiers et deuxièmes moyens (68,74) plastiquement déformables de réglage des caractéristiques du freinage **caractérisé en ce qu'**il comporte entre autres :
- une étape préalable de déformer plastiquement les premiers moyens (68) de manière axiale afin de fixer le jeu (j) à une valeur prédéterminée (Vj) entre les faces arrières (52, 50) du piston de réaction (42) et de la bague annulaire (44) ;
- une étape suivante de déformer plastiquement les seconds moyens (74) de manière axiale afin de fixer la charge (ch) du moyen élastique (40) à une valeur prédéterminée (Vch).

12. Procédé selon la revendication 11, **caractérisé en ce que** le moyen élastique (40) est un ressort hélicoïdal.

13. Procédé selon la revendication 11 ou 12 **caractérisé en ce que** les premiers moyens (68) permettent de fixer un jeu (j) à une valeur prédéterminée (Vj) entre les plans comportant les faces arrières (52,50) respectivement du piston de réaction (42) et de la bague annulaire (44).

14. Procédé selon la revendication précédente **caractérisé en ce que** les premiers moyens (68) sont disposés entre une face avant (66) de la bague annulaire (44) et une face arrière (62) d'une ailette (60) s'étendant radialement vers l'extérieur de la périphérie du corps du piston de réaction (52).

15. Procédé selon l'une quelconque des revendications 11 à 14 **caractérisé en ce que** les deuxièmes moyens (74) permettent de fixer la charge (ch) du moyen élastique (40) à une valeur prédéterminée (Vch).

16. Dispositif de mise en oeuvre de l'étape préalable du procédé selon les revendications 11 à 15 de fabrication d'un servomoteur d'assistance pneumatique au freinage comportant une enveloppe (2) d'axe longitudinal (X) dans laquelle sont délimitées de manière étanche une chambre à basse pression (10) et une chambre à pression variable (8) par une paroi mobile (12) portant un piston pneumatique (18) dans sa partie centrale, une valve trois voies (20) disposée dans la partie arrière du piston pneumatique (18) et commandée par une tige d'actionnement (27), la valve trois voies comportant un clapet de rééquilibrage (22) entre la chambre à basse pression (10) et la chambre à pression variable (8) et un clapet d'alimentation (24) en haute pression de la chambre à pression variable (8), ledit clapet d'alimentation comportant un siège de clapet porté par une première extrémité longitudinale d'un distributeur plongeur (28) et recevant une extrémité longitudinale de la tige d'actionnement (27), ledit distributeur plongeur (28) portant un palpeur (30) perpendiculaire à l'axe longitudinal (X) à une deuxième extrémité longitudinale opposée à la première extrémité longitudinale et venant en contact d'une face d'un disque de réaction (32) lors d'une phase de freinage, ledit disque de réaction étant disposé dans un logement (34) solidaire d'une tige de poussée (36) actionnant un maître-cylindre, ledit logement (34) comportant un dispositif (D) d'assistance pneumatique au freinage muni d'une cage (38) solidaire de la tige de poussée (36) par une première extrémité longitudinale fermée et obturée à une deuxième extrémité longitudinale ouverte par une bague annulaire (44) solidaire de la cage (38) et un piston de réaction (42) monté à coulissement dans la bague (44) selon l'axe longitudinal (X), ledit piston étant maintenu en réaction contre la bague (44) par un moyen élastique (40) de charge (ch) en appui par son extrémité arrière contre la première extrémité fermée de la cage (38), la surface formée par le faces arrières (50,52) de la bague annulaire (44) et du piston de réaction (42) formant l'extrémité longitudinale avant du logement (34) du disque de réaction, ledit dispositif comportant des moyens (68,74) plastiquement déformables de réglage des caractéristiques du freinage, le dispositif comportant un premier élément (202) et un second élément (204) mobile relativement au premier élément (202) selon l'axe longitudinal (X), ledit premier élément (202) comportant une surface de référence définissant la valeur prédéterminée (Vj) du jeu (j) et le second élément (204) comportant une surface d'appui annulaire coopérant avec la face avant (64) de l'ailette (60) du piston de réaction (42).

17. Dispositif de mise en oeuvre de l'étape *suivante* du procédé selon les revendications 11 à 15 **caractérisé en ce qu'**il comporte un troisième élément (302) et un quatrième élément (304) mobile selon l'axe longitudinal (X) relativement au troisième élément (302), ledit troisième élément comportant une surface d'appui annulaire de la face avant (66) de la bague annulaire et un moyen de détection (307) de l'effort appliqué sur le piston de réaction (42) par le moyen élastique (40), le quatrième élément (304) comportant une surface d'application d'un effort de déformation sur la cage (38) de manière à déformer plastiquement les seconds moyens (74) lors d'un déplacement axiale du quatrième élément (304) en direction du troisième élément (302) de manière à ce que la charge du moyen élastique (40) soit égale à la valeur prédéterminée (Vch).

## Claims

1. Pneumatic brake booster comprising a casing (2) with a longitudinal axis (X) in which are sealingly by delimited a low-pressure chamber (10) and a variable-pressure chamber (8) by a moveable wall (12) supporting a pneumatic piston (18) in its central portion, a three-way valve (20) being placed in the rear portion of the pneumatic piston (18) and controlled by an actuator rod (27), the three-way valve comprising a valve element (22) for rebalancing between the low-pressure chamber (10) and the variable-pressure chamber (8) and a valve element (24) for supplying the variable-pressure chamber (8) with high pressure, the said supply valve element comprising a valve-element seat supported by a first longitudinal end of a plunging distributor (28) and receiving a longitudinal end of the actuator rod (27), the said plunging distributor (28) supporting a probe (30) perpendicular to the longitudinal axis (X) at a second longitudinal end opposite to the first longitudinal end and coming into contact with a face of a reaction disc (32) during a braking phase, the said reaction disc being placed in a housing (34) secured to a push-rod (36) actuating a master cylinder, the said housing (34) comprising a pneumatic brake-boosting device (D) furnished with a cage (38) secured to the push-rod (36) by a first closed longitudinal end and closed off at a second open longitudinal end by an annular ring (44) secured to the cage (38) and a reaction piston (42) slidingly mounted in the ring (44) along the longitudinal axis (X), the said piston being kept in reaction against the ring (44) by an elastic loading (ch) means (40) resting by its rear end against the first closed end of the cage (38), the surface formed by the rear faces (50, 52) of the annular ring (44) and of the reaction piston (42) forming the front longitudinal end of the housing (34) of the reaction disc, **characterized in that** the said device comprises first and second plastically deformable means (68, 74) for adjusting the braking characteristics, **in that** the first means (68) make it possible to set a clearance (j) at a predetermined value (Vj) between the planes comprising the rear faces (52, 50) respectively of the reaction piston (42) and of the annular ring (44), **in that** the first means (68) are placed between a front face (66) of the annular ring (44) and a rear face (62) of a fin (60) extending radially outwards from the periphery of the body of the reaction piston (52), **in that** the second means (74) make it possible to set the loading (ch) of the elastic means (40) at a predetermined value (Vch) and **in that** the second means (74) are placed in the emergency brake booster device (D) so as to modify the axial position of the first closed end of the cage (38) relative to the reaction piston (42).

2. Booster according to Claim 1, **characterized in that** the elastic means (40) is a coil spring.

3. Booster according to the preceding claim, **characterized in that** the said first means (68) are formed by an annular element.

4. Booster according to Claim 1 or 2, **characterized in that** the said first means (68) are formed by an annular protrusion made in one piece with the annular ring (44) extending axially towards the front from the front face (66) of the annular ring.

5. Booster according to Claim 1 or 2, **characterized in that** the said first means (68) are formed by an annular protrusion made in one piece with the fin (60) and extending axially towards the rear from the rear face (62) of the fin (60).

6. Booster according to the preceding claim, **characterized in that** the second means (74) are formed by an annular element placed between the front face (66) of the annular ring (44) and the rear face of an internal bearing surface (47) of the cage (38).

7. Booster according to Claims 1 to 5, **characterized in that** the second means (74) are formed by an annular protrusion made in one piece with the annular ring (44) extending from the front face (66) of the annular ring axially towards an internal bearing surface (47) of the cage (38).

8. Booster according to Claims 1 to 5, **characterized in that** the cage (38) comprises a sleeve (381) closed off at a first front longitudinal end (383) by a cover (382) secured to the push-rod (36), the second means (74) being placed between the front longitudinal end of the sleeve (381) and a rear face of the cover (382).

9. Booster according to the preceding claim, **characterized in that** the second means (74) are formed by an annular protrusion made in one piece with the sleeve (381) and extending axially in the direction of the cover (382).

10. Booster according to Claims 8 or 9, **characterized in that** the said cover (382) is secured to the sleeve (381) by means of an annular extension that is radially external relative to the annular protrusion forming the second means (74) and folding by plastic deformation onto the front face of the cover (382).

11. Method for manufacturing a pneumatic brake booster comprising a casing (2) with a longitudinal axis (X) in which are sealingly delimited a low-pressure chamber (10) and a variable-pressure chamber (8) by a movable wall (12) supporting a pneumatic piston (18) in its central portion, a three-way valve (20) being placed in the rear portion of the pneumatic piston (18) and controlled by an actuator rod (27), the three-way valve comprising a valve element (22) for rebalancing between the low-pressure chamber (10) and the variable-pressure chamber (8) and a valve element (24) for supplying the variable-pressure chamber (8) with high pressure, the said supply valve element comprising a valve-element seat supported by a first longitudinal end of a plunging distributor (28) and receiving a longitudinal end of the actuator rod (27), the said plunging distributor (28) supporting a probe (30) perpendicular to the longitudinal axis (X) at a second longitudinal end opposite to the first longitudinal end and coming into contact with a face of a reaction disc (32) during a braking phase, the said reaction disc being placed in a housing (34) secured to a push-rod (36) actuating a master cylinder, the said housing (34) comprising a pneumatic brake booster device (D) furnished with a cage (38) secured to the push-rod (36) by a first closed longitudinal end and closed off at a second open longitudinal end by an annular ring (44) secured to the cage (38) and a reaction piston (42) slidingly mounted in the ring (44) along the longitudinal axis (X), the said piston being kept in reaction against the ring (44) by an elastic loading (ch) means (40) resting by its rear end against the first closed end of the cage (38), the surface formed by the rear faces (50, 52) of the annular ring (44) and of the reaction piston (42) forming the front longitudinal end of the housing (34) of the reaction disc, the said device comprising first and second plastically deformable means (68, 74) for adjusting the braking characteristics, **characterized in that** it comprises among other things:
- a preliminary step of plastically deforming the first means (68) in an axial manner in order to set the clearance (j) at a predetermined value (Vj) between the rear faces (52, 50) of the reaction piston (42) and of the annular ring (44);
- a subsequent step of plastically deforming the second means (74) in an axial manner in order to set the loading (ch) of the elastic means (40) at a predetermined value (Vch).

12. Method according to Claim 11, **characterized in that** the elastic means (40) is a coil spring.

13. Method according to Claim 11 or 12, **characterized in that** the first means (68) make it possible to set a clearance (j) at a predetermined value (Vj) between the planes comprising the rear faces (52, 50), respectively of the reaction piston (42) and of the annular ring (44).

14. Method according to the preceding claim, **characterized in that** the first means (68) are placed between a front face (66) of the annular ring (44) and a rear face (62) of a fin (60) extending radially towards the outside from the periphery of the body of the reaction piston (52).

15. Method according to any one of Claims 11 to 14, **characterized in that** the second means (74) make it possible to set the loading (ch) of the elastic means (40) at a predetermined value (Vch).

16. Device for applying the preliminary step of the method according to Claims 11 to 15 for manufacturing a pneumatic brake booster comprising a casing (2) with a longitudinal axis (X) in which are sealingly delimited a low-pressure chamber (10) and a variable-pressure chamber (8) by a moveable wall (12) supporting a pneumatic piston (18) in its central portion, a three-way valve (20) being placed in the rear portion of the pneumatic piston (18) and controlled by an actuator rod (27), the three-way valve comprising a valve element (22) for rebalancing between the low-pressure chamber (10) and the variable-pressure chamber (8) and a valve element (24) for supplying the variable-pressure chamber (8) with high-pressure, the said supply valve element comprising a valve-element seat supported by a first longitudinal end of a plunging distributor (28) and receiving a longitudinal end of the actuator rod (27), the said plunging distributor (28) supporting a probe (30) perpendicular to the longitudinal axis (X) at a second longitudinal end opposite to the first longitudinal end and coming into contact with a face of a reaction disc (32) during a braking phase, the said reaction disc being placed in a housing (34) secured to a push-rod (36) actuating a master cylinder, the said housing (34) comprising a pneumatic brake booster device (D) furnished with a cage (38) secured to the push-rod (36) by a first closed longitudinal end and closed off at a second open longitudinal end by an annular ring (44) secured to the cage (38) and a reaction piston (42) slidingly mounted in the ring (44) along the longitudinal axis (X), the said piston being kept in reaction against the ring (44) by an elastic loading (ch) means (40) resting by its rear end against the first closed end of the cage (38), the surface formed by the rear faces (50, 52) of the annular ring (44) and of the reaction piston (42) forming the front longitudinal end of the housing (34) of the reaction disc, the said device comprising plastically deformable means (68, 74) for adjusting the braking characteristics, the device comprising a first element (202) and a second element (204) that can move relative to the first element (202) along the longitudinal axis (X), the said first element (202) comprising a reference surface defining the predetermined value (Vj) of the clearance (j) and the second element (204) comprising an annular bearing surface interacting with the front face (64) of the fin (60) of the reaction piston (42).

17. Device for applying the subsequent step of the method according to Claims 11 to 15, **characterized in that** it comprises a third element (302) and a fourth element (304) that can move along the longitudinal axis (X) relative to the third element (302), the said third element comprising an annular bearing surface of the front face (66) of the annular ring and a means (307) for detecting the force applied to the reaction piston (42) by the elastic means (40), the fourth element (304) comprising a surface for applying a deformation force on the cage (38) so as to plastically deform the second means (74) during an axial movement of the fourth element (304) in the direction of the third element (302) so that the loading of the elastic means (40) is equal to the predetermined value (Vch).

## Patentansprüche

1. Pneumatischer Bremshilfe-Servomotor, der eine Hülle (2) mit einer Längsachse (X) aufweist, in der eine Niederdruckkammer (10) und eine Kammer mit variablem Druck (8) durch eine bewegliche Wand (12) dicht begrenzt sind, die in ihrem mittleren Bereich einen pneumatischen Kolben (18) trägt, wobei ein Dreiwegeventil (20) im hinteren Bereich des pneumatischen Kolbens (18) angeordnet ist und von einer Betätigungsstange (27) gesteuert wird, wobei das Dreiwegeventil eine Ausgleichsklappe (22) zwischen der Niederdruckkammer (10) und der Kammer mit variablem Druck (8) und eine Klappe (24) zur Versorgung der Kammer mit variablem Druck (8) aufweist, wobei die Versorgungsklappe einen Klappensitz aufweist, der von einem ersten Längsende eines Tauchkolbenverteilers (28) getragen wird und ein Längsende der Betätigungsstange (27) aufnimmt, wobei der Tauchkolbenverteiler (28) an einem zweiten Längsende entgegengesetzt zum ersten Längsende einen zur Längsachse (X) lotrechten Taster (30) trägt, der in einer Bremsphase mit einer Seite einer Reaktionsscheibe (32) in Kontakt kommt, wobei die Reaktionsscheibe in einer Aufnahme (34) angeordnet ist, die fest mit einer einen Hauptzylinder betätigenden Schubstange (36) verbunden ist, wobei die Aufnahme (34) eine pneumatische Bremshilfevorrichtung (D) aufweist, die mit einem Käfig (38) versehen ist, der über ein geschlossenes erstes Längsende fest mit der Schubstange (36) verbunden ist und an einem zweiten offenen Längsende von einem fest mit dem Käfig (38) verbundenen Ring (44) und einem Reaktionskolben (42) verschlossen wird, der in den Ring (44) gemäß der Längsachse (X) gleitend montiert ist, wobei der Kolben durch eine elastische Einrichtung (40) einer Last (ch), die über ihr hinteres Ende gegen das erste geschlossene Ende des Käfigs (38) anliegt, in Reaktion gegen den Ring (44) gehalten wird, wobei die von den Rückseiten (50, 52) des Rings (44) und des Reaktionskolbens (42) geformte Fläche das vordere Längsende der Aufnahme (34) der Reaktionsscheibe formt, **dadurch gekennzeichnet, dass** die Vorrichtung erste und zweite plastisch verformbare Einstelleinrichtungen (68, 74) der Bremseigenschaften aufweist, dass die ersten Einrichtungen (68) es ermöglichen, ein Spiel (j) auf einem vorbestimmten Wert (Vj) zwischen den Ebenen festzulegen, die die Rückseiten (52, 50) des Reaktionskolbens (42) bzw. des Rings (44) aufweisen, dass die ersten Einrichtungen (68) zwischen einer Vorderseite (66) des Rings (44) und einer Rückseite (62) einer Rippe (60) angeordnet sind, die sich radial nach außerhalb des Umfangs des Körpers des Reaktionskolbens (52) erstreckt, dass die zweiten Einrichtungen (74) es ermöglichen, die Last (ch) der elastischen Einrichtung (40) auf einem vorbestimmten Wert (Vch) festzulegen, und dass die zweiten Einrichtungen (74) in der Notbremshilfevorrichtung (D) angeordnet sind, um die axiale Stellung des ersten geschlossenen Endes des Käfigs (38) bezüglich des Reaktionskolbens (42) zu verändern.

2. Servomotor nach Anspruch 1, **dadurch gekennzeichnet, dass** die elastische Einrichtung (40) eine Spiralfeder ist.

3. Servomotor nach dem vorhergehenden Anspruch, **dadurch gekennzeichnet, dass** die ersten Einrichtungen (68) von einem Ring geformt werden.

4. Servomotor nach Anspruch 1 oder 2, **dadurch gekennzeichnet, dass** die ersten Einrichtungen (68) von einem aus einem Material mit dem Ring (44) bestehenden ringförmigen Vorsprung geformt werden, der sich axial vor die Vorderseite (66) des Rings erstreckt.

5. Servomotor nach Anspruch 1 oder 2, **dadurch gekennzeichnet, dass** die ersten Einrichtungen (68) von einem aus einem Material mit der Rippe (60) bestehenden ringförmigen Vorsprung geformt werden, der sich axial hinter die Rückseite (62) der Rippe (60) erstreckt.

6. Servomotor nach dem vorhergehenden Anspruch, **dadurch gekennzeichnet, dass** die zweiten Einrichtungen (74) von einem Ring geformt werden, der zwischen der Vorderseite (66) des Rings (44) und der Rückseite einer inneren Lagerfläche (47) des Käfigs (38) angeordnet ist.

7. Servomotor nach den Ansprüchen 1 bis 5, **dadurch gekennzeichnet, dass** die zweiten Einrichtungen (74) von einem aus einem Material mit dem Ring (44) bestehenden ringförmigen Vorsprung geformt werden, der sich von der Vorderseite (66) des Rings axial zu einer inneren Lagerfläche (47) des Käfigs (38) erstreckt.

8. Servomotor nach den Ansprüchen 1 bis 5, **dadurch gekennzeichnet, dass** der Käfig (38) eine Muffe (381) aufweist, die an einem ersten vorderen Längsende (383) von einem fest mit der Schubstange (36) verbundenen Deckel (382) verschlossen wird, wobei die zweiten Einrichtungen (74) zwischen dem vorderen Längsende der Muffe (381) und einer Rückseite des Deckels (382) angeordnet sind.

9. Servomotor nach dem vorhergehenden Anspruch, **dadurch gekennzeichnet, dass** die zweiten Einrichtungen (74) von einem ringförmigen Vorsprung geformt werden, der aus einem Material mit der Muffe (381) besteht und sich axial in Richtung des Deckels (382) erstreckt.

10. Servomotor nach den Ansprüchen 8 oder 9, **dadurch gekennzeichnet, dass** der Deckel (382) mittels einer ringförmigen Verlängerung fest mit der Muffe (381) verbunden ist, die bezüglich des die zweiten Einrichtungen (74) formenden ringförmigen Vorsprungs radial außen liegt und sich durch plastische Verformung auf die Vorderseite des Deckels (382) umklappt.

11. Verfahren zur Herstellung eines pneumatischer Bremshilfe-Servomotors, der eine Hülle (2) mit einer Längsachse (X) aufweist, in der eine Niederdruckkammer (10) und eine Kammer mit variablem Druck (8) durch eine bewegliche Wand (12) dicht begrenzt sind, die in ihrem mittleren Bereich einen pneumatischen Kolben (18) trägt, wobei ein Dreiwegeventil (20) im hinteren Bereich des pneumatischen Kolbens (18) angeordnet ist und von einer Betätigungsstange (27) gesteuert wird, wobei das Dreiwegeventil eine Ausgleichsklappe (22) zwischen der Niederdruckkammer (10) und der Kammer mit variablem Druck (8) und eine Klappe (24) zur Versorgung der Kammer mit variablem Druck (8) aufweist, wobei die Versorgungsklappe einen Klappensitz aufweist, der von einem ersten Längsende eines Tauchkolbenverteilers (28) getragen wird und ein Längsende der Betätigungsstange (27) aufnimmt, wobei der Tauchkolbenverteiler (28) an einem zweiten Längsende entgegengesetzt zum ersten Längsende einen zur Längsachse (X) lotrechten Taster (30) trägt, der in einer Bremsphase mit einer Seite einer Reaktionsscheibe (32) in Kontakt kommt, wobei die Reaktionsscheibe in einer Aufnahme (34) angeordnet ist, die fest mit einer einen Hauptzylinder betätigenden Schubstange (36) verbunden ist, wobei die Aufnahme (34) eine pneumatische Bremshilfevorrichtung (D) aufweist, die mit einem Käfig (38) versehen ist, der über ein geschlossenes erstes Längsende fest mit der Schubstange (36) verbunden ist und an einem zweiten offenen Längsende von einem fest mit dem Käfig (38) verbundenen Ring (44) und einem Reaktionskolben (42) verschlossen wird, der in den Ring (44) gemäß der Längsachse (X) gleitend montiert ist, wobei der Kolben durch eine elastische Einrichtung (40) einer Last (ch), die über ihr hinteres Ende gegen das erste geschlossene Ende des Käfigs (38) anliegt, in Reaktion gegen den Ring (44) gehalten wird, wobei die von den Rückseiten (50, 52) des Rings (44) und des Reaktionskolbens (42) geformte Fläche das vordere Längsende der Aufnahme (34) der Reaktionsscheibe formt, wobei die Vorrichtung erste und zweite plastisch verformbare Einrichtungen (68, 74) zur Einstellung der Bremseigenschaften aufweist, **dadurch gekennzeichnet, dass** es unter anderem aufweist:
- einen vorhergehenden Schritt der axialen plastischen Verformung der ersten Einrichtungen (68), um das Spiel (j) auf einen vorbestimmten Wert (Vj) zwischen den Rückseiten (52, 50) des Reaktionskolbens (42) und dem Ring (44) festzulegen;
- einen folgenden Schritt der axialen plastischen Verformung der zweiten Einrichtungen (74), um die Last (ch) der elastischen Einrichtung (40) auf einen vorbestimmten Wert (Vch) festzulegen.

12. Verfahren nach Anspruch 11, **dadurch gekennzeichnet, dass** die elastische Einrichtung (40) eine Spiralfeder ist.

13. Verfahren nach Anspruch 11 oder 12, **dadurch gekennzeichnet, dass** die ersten Einrichtungen (68) es ermöglichen, ein Spiel (j) auf einen vorbestimmten Wert (Vj) zwischen den Ebenen festzulegen, die die Rückseiten (52, 50) des Reaktionskolbens (42) bzw. des Rings (44) enthalten.

14. Verfahren nach dem vorhergehenden Anspruch, **dadurch gekennzeichnet, dass** die ersten Einrichtungen (68) zwischen einer Vorderseite (66) des Rings (44) und einer Rückseite (62) einer Rippe (60) angeordnet sind, die sich vom Umfang des Körpers des Reaktionskolbens (52) radial nach außen erstreckt.

15. Verfahren nach einem der Ansprüche 11 bis 14, **dadurch gekennzeichnet, dass** die zweiten Einrichtungen (74) es ermöglichen, die Last (ch) der elastischen Einrichtung (40) auf einen vorbestimmten Wert (Vch) festzulegen.

16. Vorrichtung zur Durchführung des vorhergehenden Schritts des Verfahrens nach den Ansprüchen 11 bis 15 zur Herstellung eines pneumatischer Bremshilfe-Servomotors, der eine Hülle (2) mit einer Längsachse (X) aufweist, in der eine Niederdruckkammer (10) und eine Kammer mit variablem Druck (8) durch eine bewegliche Wand (12) dicht begrenzt sind, die in ihrem mittleren
Bereich einen pneumatischen Kolben (18) trägt, wobei ein Dreiwegeventil (20) im hinteren Bereich des pneumatischen Kolbens (18) angeordnet ist und von einer Betätigungsstange (27) gesteuert wird, wobei das Dreiwegeventil eine Ausgleichsklappe (22) zwischen der Niederdruckkammer (10) und der Kammer mit variablem Druck (8) und eine Klappe (24) zur Versorgung der Kammer mit variablem Druck (8) aufweist, wobei die Versorgungsklappe einen Klappensitz aufweist, der von einem ersten Längsende eines Tauchkolbenverteilers (28) getragen wird und ein Längsende der Betätigungsstange (27) aufnimmt, wobei der Tauchkolbenverteiler (28) an einem zweiten Längsende entgegengesetzt zum ersten Längsende einen zur Längsachse (X) lotrechten Taster (30) trägt, der in einer Bremsphase mit einer Seite einer Reaktionsscheibe (32) in Kontakt kommt, wobei die Reaktionsscheibe in einer Aufnahme (34) angeordnet ist, die fest mit einer einen Hauptzylinder betätigenden Schubstange (36) verbunden ist, wobei die Aufnahme (34) eine pneumatische Bremshilfevorrichtung (D) aufweist, die mit einem Käfig (38) versehen ist, der über ein geschlossenes erstes Längsende fest mit der Schubstange (36) verbunden ist und an einem zweiten offenen Längsende von einem fest mit dem Käfig (38) verbundenen Ring (44) und einem Reaktionskolben (42) verschlossen wird, der in den Ring (44) gemäß der Längsachse (X) gleitend montiert ist, wobei der Kolben durch eine elastische Einrichtung (40) einer Last (ch), die über ihr hinteres Ende gegen das erste geschlossene Ende des Käfigs (38) anliegt, in Reaktion gegen den Ring (44) gehalten wird, wobei die von den Rückseiten (50, 52) des Rings (44) und des Reaktionskolbens (42) geformte Fläche das vordere Längsende der Aufnahme (34) der Reaktionsscheibe formt, wobei die Vorrichtung plastisch verformbare Einrichtungen (68, 74) zur Einstellung der Bremseigenschaften aufweist, wobei die Vorrichtung ein erstes Element (202) und ein zweites Element (204) aufweist, das bezüglich des ersten Elements (202) entlang der Längsachse (X) beweglich ist, wobei das erste Element (202) eine Bezugsfläche aufweist, die den vorbestimmten Wert (Vj) des Spiels (j) definiert, und das zweite Element (204) eine ringförmige Auflagefläche aufweist, die mit der Vorderseite (64) der Rippe (60) des Reaktionskolbens (42) zusammenwirkt.

17. Vorrichtung zur Durchführung des folgenden Schritts des Verfahrens nach den Ansprüchen 11 bis 15, **dadurch gekennzeichnet, dass** sie ein drittes Element (302) und ein viertes Element (304) aufweist, das bezüglich des dritten Elements (302) entlang der Längsachse (X) beweglich ist, wobei das dritte Element eine ringförmige Auflagefläche der Vorderseite (66) des Rings und eine Erfassungseinrichtung (307) der durch die elastische Einrichtung (40) auf den Reaktionskolben (42) ausgeübten Kraft aufweist, wobei das vierte Element (304) eine Anwendefläche einer Verformungskraft auf den Käfig (38) aufweist, um die zweiten Einrichtungen (74) bei einer axialen Verschiebung des vierten Elements (304) in Richtung des dritten Elements (302) plastisch zu verformen, damit die Last der elastischen Einrichtung (40) gleich dem vorbestimmten Wert (Vch) ist.
